# EUROPÄISCHE PATENTSCHRIFT

(11) **EP 3 262 333 B1**
(45) Veröffentlichungstag und Bekanntmachung des Hinweises auf die Patenterteilung: **07.06.2023**
(21) Anmeldenummer: 16706511.9
(22) Anmeldetag: 04.02.2016
(51) Int. Cl.: F16M 11/10, F16M 11/18, F16F 9/12, G03B 17/56, H04N 5/232, F16M 13/00

(54) **ROTATIONS-STABILISIERUNGSEINRICHTUNG**
ROTATION STABILIZATION DEVICE
DISPOSITIF DE STABILISATION DE ROTATION

(30) Priorität: 23.02.2015 AT 972015
(43) Veröffentlichungstag der Anmeldung: 03.01.2018
(73) Patentinhaber: Peters, Jens C., 9212 Techelsberg/Wörthersee (AT)
(72) Erfinder: Peters, Jens C., 9212 Techelsberg/Wörthersee (AT)
(74) Vertreter: Beer & Partner Patentanwälte KG
(86) Internationale Anmeldenummer: PCT/AT2016/000008
(87) Internationale Veröffentlichungsnummer: WO 2016/134388

(56) Entgegenhaltungen:
- DE-B3-102012 203 834
- GB-A- 2 282 863
- US-A1- 2004 226 395
- US-A1- 2007 050 139
- US-A1- 2011 221 900
- US-A1- 2014 218 603

## Beschreibung

Die Erfindung betrifft eine Rotations-Stabilisierungseinrichtung mit einer optischen Vorrichtung, insbesondere einer Kamera, und einer Lageregelungsvorrichtung für die optische Vorrichtung mit einem Trägerrahmen, mit wenigstens einer Rotationsachse, welche durch den Schwerpunkt der optischen Vorrichtung verläuft, mit wenigstens einem ersten Rotationskörper und wenigstens einem zweiten Rotationskörper, die auf der Rotationsachse angeordnet sind, wobei die optische Vorrichtung über den zweiten Rotationskörper schwenkbar ist, mit wenigstens einem Elektromotor, der den ersten Rotationskörper antreibt, mit einer Einrichtung zum Ermitteln der räumlichen Ausrichtung der optischen Vorrichtung, insbesondere ein Gyroskop, und mit einer Regelungselektronik, welche den Elektromotor ansteuert, wobei zwischen dem Elektromotor und der optischen Einrichtung ein Drehmomentwandler auf dem vom Elektromotor angetriebenen, ersten Rotationskörper angeordnet ist und wobei an der nicht zum Elektromotor weisenden Seite des Drehmomentwandlers, d.h. auf der dem Elektromotor gegenüberliegenden Seite, der zweite Rotationskörper, insbesondere eine Welle, am Drehmomentwandler angeordnet ist.

Die Erfindung betrifft weiters ein Verfahren zum Betreiben einer solchen Rotations-Stabilisierungseinrichtung.

Bei Übertragungen von Sportveranstaltungen, Dokumentationen, Konzerten usw. werden immer öfter ferngesteuerte Kameras in bewegten Aufhängungen, die an Kamerakränen, Seilen, Hubschraubern oder Multikoptern befestigt sind, verwendet. Dabei befindet sich eine Kamera in einer rahmenartigen Aufhängung.

Die Kamera wird mittels eines elektrischen Motors entlang einer Achse geschwenkt und stabilisiert. Allen bekannten Aufhängungsformen ist gemeinsam, dass die verwendeten Kameras (inkl. Objektiv) so befestigt werden, dass die Schwenk- und Neigeachse (eventuell die Rollachsen) der Kameras durch deren Schwerpunkt verlaufen. Das bewirkt, dass an der Kamera keine Momentenkräfte angreifen. Bei gewollter Drehung ist somit nur das Trägheitsmoment der Kamera und deren Halterung zu überwinden. Nachteilig ist allerdings, dass bei einem stark gezoomten Bildausschnitt der Kamera bereits kleinste Störgrößen auf die Halterung zu einem instabilen Bild führen können.

Es ist zudem bekannt, dass die optische Vorrichtung bzw. die Halterung über eine Regelelektronik mit Hilfe eines Lagesensors (elektrischer Kreisel = Gyroskop) und eines Stellmotors stabilisiert und konstant gehalten wird. Der Nachteil einer solchen rein mechanischen Kopplung des Stellmotors an die zu stabilisierende Vorrichtung wird durch sehr unsanfte Verläufe bei Bewegungsabläufen bzw. bei der Winkelstabilisierung ersichtlich. Gerade bei Ausgleichsbewegungen (durch Störgrößen verursacht) zur Winkelstabilisierung sind nur sehr kleine Änderungsbewegungen der Kamera nötig. Am Beginn und am Ende jeder Ausgleichsbewegung lässt sich jedoch ein sprungartiges Verhalten in der Bewegung der Stellmotoren feststellen.

Diese sprunghaften Antworten der Regelung auf Störgrößen entstehen durch mechanische Reibung und mechanische Toleranz in den verwendeten Bauteilen. Da Haftreibung größer als Gleitreibung ist, kommt es beim Übergang von der Haftreibungszone in die Gleitreibungszone bzw. wieder zurück zu einem sprunghaften Verhalten während des Überganges.

Weiters wird in vielen Regelungsanwendungen ein Stellmotor mit angebautem Getriebe verwendet. Viele kostengünstige Getriebebauarten besitzen allerdings ein sogenanntes Getriebespiel, welches sich für eine kontinuierliche Regelung als unüberwindbares Problem herausstellt. Jede Regelungsbewegung in Gegenrichtung zur letzten Bewegung muss dieses Getriebespiel überwinden und wirkt daher zu spät oder zu heftig auf die Regelabweichung ein.

Eine gattungsgemäße Einrichtung ist aus der US 2007/050139 A1 bekannt.

Der Erfindung liegt die Aufgabe zugrunde, eine Stabilisierungsvorrichtung für die Kamera zu schaffen, die mechanische Einflüsse der eingangs beschriebenen Art auf das Regelverhalten eliminiert.

Gelöst wird diese Aufgabe erfindungsgemäß mit einer Vorrichtung, welche die Merkmale des Anspruches 1 aufweist.

Weiters wird diese Aufgabe erfindungsgemäß mit einem Verfahren gelöst, welches die Merkmale des Anspruches 11 aufweist.

Bevorzugte und vorteilhafte Ausführungsformen der Erfindung sind Gegenstand der Unteransprüche.

Zwischen dem Elektromotor und der optischen Einrichtung ist ein Drehmomentwandler auf dem vom Elektromotor angetriebenen ersten Rotationskörper angeordnet, wobei an der nicht zum Elektromotor weisenden Seite des Drehmomentwandlers, d.h. auf der dem Elektromotor gegenüberliegenden Sei der zweite Rotationskörper, insbesondere eine Welle, am Drehmomentwandler angeordnet ist. Die Lage der optischen Einrichtung wird durch den zwischen dem Elektromotor und der optischen Einrichtung auf dem vom Elektromotor angetriebenen Rotationskörper angeordneten Drehmomentwandler geregelt. Somit wird erreicht, dass jede Regelungs-Antwort auf Störgrößen ohne Stoß oder Sprung erfolgt. Daraus resultierende Ausgleichsbewegungen auf die optische Vorrichtung sind äußerst präzise und unterliegen nur gleichförmigen Beschleunigungen bzw. Verzögerungen mit sanften Übergängen. Die optische Vorrichtung kann daher in einer bestimmten Winkelposition stabilisiert und konstant gehalten werden, wobei die Störgrößen ausgeglichen werden.

Erfindungsgemäß ist vorgesehen, dass auf zwei gegenüberliegenden Seiten der optischen Einrichtung jeweils ein Elektromotor und ein hydrodynamischer Drehmomentwandler vorgesehen ist, die sich auf derselben Rotationsachse befinden, und dass die zwei hydrodynamischen Drehmomentwandler in gegengleicher oder in gleicher Richtung und/oder mit gleicher oder unterschiedlicher Drehzahl antreibbar sind. Die Lage der optischen Einrichtung wird durch zwei auf gegenüberliegenden Seiten der optischen Einrichtung angeordnete, hydrodynamische Drehmomentwandler, die sich jeweils auf derselben Rotationsachse befinden, geregelt, von denen aus jeweils ein zweiter Rotationskörper auf der Rotationsachse verläuft, wobei die zwei hydrodynamischen Drehmomentwandler in gegengleicher oder in gleicher Richtung und/oder mit gleicher oder unterschiedlicher Drehzahl angetrieben werden.

Die mechanische Anordnung der beiden Einheiten aus jeweils einem Motor und einem hydrodynamischen Drehmomentwandler erlaubt es, dass entweder beide Motoren in der gleichen Drehrichtung drehen können oder jeweils einer gegensinnig zum andern drehen kann. Da beide an einer Achse angreifenden Einheiten durch die gegengleiche Rotation gegeneinander verspannt sind, wirkt der hydrodynamische Drehmomentwandler auch gleichzeitig als Dämpfer. Die Einheit kann also auch als Motor-/Drehdämpfer-Einheit bezeichnet werden.

Durch diese Anordnung und Regelung der hydrodynamischen Drehmomentwandler, wird eine Stabilisierung der Achse bzw. der optischen Einrichtung erreicht. Eine Stabilisierung bzw. ein Verharren der Achse in einer gewünschten Position kann dann eintreten, wenn die beiden auf einer Achse gegenüber angeordneten Motor-/Drehdämpfer mit dem gleich großen Moment aber gegengleich rotieren.

Unter optischer Einrichtung wird im Rahmen der Erfindung vorzugsweise eine Einrichtung zum Aufnehmen und/oder Wiedergeben von Bildern verstanden, insbesondere eine Kamera.

In einer bevorzugten Ausführungsform kann der hydrodynamische Drehmomentwandler aus einem trommelförmigen, geschlossenen Gehäuse bestehen, welches mit einem hochviskosen Öl gefüllt ist. In die Trommel führt mittig eine abgedichtete Antriebswelle, die an einem Ende von einem Elektromotor angetrieben wird. Am anderen Ende der Antriebswelle befindet sich in der Trommel ein Schaufelrad. Dieses Schaufelrad kann sich frei im mit Öl gefüllten Trommelgehäuse drehen und wird versuchen, wenn es von außen über die Antriebswelle angetrieben wird, das trommelförmige Gehäuse bedingt durch die hohe Viskosität des Öls in der gleichen Richtung mit sich zu drehen.

Erfindungsgemäß ist an einer nicht zum Elektromotor weisenden Seite des hydrodynamischen Drehmomentwandlers, insbesondere auf der dem Elektromotor gegenüberliegenden Seite, der zweite Rotationskörper, insbesondere eine Welle, am hydrodynamischen Drehmomentwandler angeordnet. Auf diesem Rotationskörper wird das Drehmoment, das im Inneren des Schaufelrads über das Öl an die Trommel übertragen wird, abgeleitet. Das Drehmoment, mit welchem die Trommel mitgenommen wird, ist in einem weiten Bereich abhängig von der Drehzahl des Schaufelrades.

Im Rahmen der Erfindung kann vorgesehen sein, dass der am hydrodynamischen Drehmomentwandler angeordnete, zweite Rotationskörper ein Verbindungsstück zwischen dem hydrodynamischen Drehmomentwandler und der optischen Einrichtung ist, insbesondere dass der am hydrodynamischen Drehmomentwandler angeordnete zweite Rotationskörper mit der optischen Einrichtung oder mit einer Halterung der optischen Einrichtung verbunden ist. Über das vom Trommelgehäuse an den Rotationskörper übertragene Drehmoment wird die Halterung um die Drehachse des Rotationskörpers gedreht bzw. geschwenkt.

Erfindungsgemäß ist vorgesehen, dass der am hydrodynamischen Drehmomentwandler angeordnete, zweite Rotationskörper und gegebenenfalls der vom Elektromotor angetriebene erste Rotationskörper auf der Rotationsachse angeordnet sind. Durch diese Anordnung von Bauteilen wird verhindert, dass ein mögliches Spiel durch Verwendung weiterer Kraft übertragender Bauteile entstehen kann.

Eine weitere Ausführungsform sieht vor, dass der Trägerrahmen eine Ausnehmung, insbesondere eine Bohrung, aufweist und dass der am hydrodynamischen Drehmomentwandler angeordnete, zweite Rotationskörper durch eine Ausnehmung des Trägerrahmens geführt ist. Durch diese Ausführungsform soll gewährleistet werden, dass die Rotationsachse bevorzugt durch den Schwerpunkt der Vorrichtung, bzw. so nahe wie möglich daran, verläuft.

Vorzugsweise ist vorgesehen, dass die optische Einrichtung über den am hydrodynamischen Drehmomentwandler angeordneten, zweiten Rotationskörper schwenkbar ist. Die optische Einrichtung kann somit auf der Rotationsachse um 360° geschwenkt und ausgerichtet werden.

Im Rahmen der Erfindung ist vorgesehen, dass eine Einrichtung zum Ermitteln der räumlichen Ausrichtung der optischen Vorrichtung an der optischen Einrichtung oder an einer Halterung der optischen Einrichtung angeordnet ist, und dass eine Regelungstechnik den Elektromotor über die Einrichtung zum Ermitteln der räumlichen Ausrichtung der optischen Einrichtung regelt bzw. steuert. Die Lagebestimmung der räumlichen Ausrichtung wird bevorzugt mittels eines Gyroskops ermittelt. Da die optische Einrichtung bewegt bzw. geschwenkt werden soll, sind Lagekoordinaten der optischen Einrichtung maßgeblich.

Bei einer weiteren Ausführungsform der Erfindung weist der Elektromotor eine Halterung auf, wobei die Halterung des Elektromotors, und gegebenenfalls die Regelungselektronik, mit dem Trägerrahmen verbunden ist. Um den Elektromotor statisch in seiner Position zu halten, ist dieser am Trägerrahmen angeordnet. Die Regelungselektronik befindet sich ebenfalls am Trägerrahmen, um nicht unnötige Masse beim Schwenken der optischen Einrichtung mit zu bewegen.

Im Rahmen der Erfindung kann vorgesehen sein, dass eine Rotationsachse im Einsatzzustand der Rotations-Stabilisierungseinrichtung im Wesentlichen waagrecht verläuft. Weiters kann vorgesehen sein, dass eine weitere Rotationsachse im Einsatzzustand der Rotations-Stabilisierungseinrichtung im Wesentlichen lotrecht ausgerichtet ist. Weiters ist es bevorzugt, wenn die Rotationsachse bzw. die Rotationsachsen durch den Schwerpunkt der Rotations-Stabilisierungseinrichtung verläuft bzw. verlaufen. Besonders bevorzugt ist, wenn der Schwerpunkt der optischen Vorrichtung gleich dem Schwerpunkt der Rotations-Stabilisierungseinrichtung ist. Durch die in einer bevorzugten Ausführungsform vorgesehenen, normal aufeinander stehenden, durch den Gesamtschwerpunkt verlaufenden Rotationsachsen, müssen bei einer Rotation nur die Trägheitsmomente durch die Motor-/Drehdämpfereinheiten überwunden werden. Bei dieser bevorzugten Ausführungsform treten sehr geringe bis keine Deviationsmomente auf.

In einer besonders bevorzugten Ausführungsform des erfindungsgemäßen Verfahrens ist vorgesehen, dass die Lage der optischen Einrichtung derart geregelt wird, dass der Verlauf des vom hydrodynamischen Drehmomentwandler übertragenen Drehmoments in einem Regelbereich im Wesentlichen linear zu seiner Drehzahl ist, und dass die Rotations-Stabilisierungseinrichtung in diesem Regelbereich linear rotatorisch bewegt wird. Durch die Linearität zwischen Drehzahl und Momente des hydrodynamischen Drehmomentwandlers, ergeben sich gleichförmig verlaufende Bewegungen der optischen Einrichtung. Der lineare Verlauf des sogenannten Abtrieb-Momentes des hydrodynamischen Drehmomentwandlers ist allerdings nur bis zu einer bautypischen Grenzdrehzahl gegeben. In der vorliegenden Regelung werden nicht lineare Bereiche allerdings vermieden. Der Betrieb erfolgt immer unterhalb der oben genannten Grenzdrehzahl, wo der Zusammenhang zwischen Drehzahl und Abtriebsmoment weitgehend linear ist. Als besonderer Vorteil treten keine sprunghaften Bewegungsabläufe auf, wie es beispielsweise bei Bewegungsabläufen mit Stellmotoren vorkommt.

Im Rahmen der Erfindung kann vorgesehen sein, dass die Rotation um die Rotationsachsen bei gegengleicher Rotationsbewegung der hydrodynamischen Drehmomentwandler zum Stillstand kommt, wenn die Drehmomente der hydrodynamischen Drehmomentwandler gleich groß sind bzw. die Summe der gegengleichen Drehmomente null ist. Weiters kann vorgesehen sein, dass die Rotation um die Rotationsachsen bei gegengleicher Rotationsbewegung der hydrodynamischen Drehmomentwandler nur dann erfolgt, wenn die Summe der Drehmomente ungleich null ist, wobei die Summe der Drehmomente einen positiven oder negativen Wert haben kann. Um die Rotationswelle auszulenken, muss die Drehzahl der Elektromotoren so geregelt werden, dass ein Differenzmoment aus den gegengleich rotierenden, hydrodynamischen Drehmomentwandlern entsteht. In die Richtung, in der das Moment größer ist, wird eine Rotationsbewegung bewirkt. Die Geschwindigkeit der Rotation hängt dabei von der Größe der Momentendifferenz ab. Stabilisiert wird erst dann wieder, wenn die gegengleichen Drehmomente wieder gleich groß sind bzw. die Differenz der Momente wieder null ist.

Eine bevorzugte Ausführungsform sieht vor, dass die Drehmomentübertragung vom Elektromotor auf den hydrodynamischen Drehmomentwandler im Bereich der Gleitreibung erfolgt, wobei insbesondere die Änderungen der vom Drehmomentwandler auf die optische Einrichtung übertragenen Drehmomente im Bereich der Gleitreibung linear verlaufen. Bei stillstehender Rotationswelle rotieren die Schaufelräder in der Trommel des hydrodynamischen Drehmomentwandlers gegensinnig mit einem Differenzmoment von null weiter. Diese Schaufelräder befinden sich somit im Bereich der Gleitreibung. Bei kleinsten Änderungen der Differenzmomente wird somit mit einer linearen Rotation (kein Auftreten eines Sprunges) des hydrodynamischen Drehmomentwandlers die Antriebsachse bewegt. Weiters ist durch die gegengleiche Rotationsbewegung die Bewegungsachse im verspannten Zustand. Bei einer möglichen Verwendung eines Getriebes zur Kraftübertragung ist somit auch ein Getriebespiel aufgehoben. Bei größeren Abweichungen arbeiten beide Motoren miteinander (Drehrichtung gleichsinnig) und die Momente der hydrodynamischen Drehmomentwandler addieren sich und sind entsprechend groß.

Vorteile einer Einheit aus einem Elektromotor und einem hydrodynamischen Drehmomentwandler gegenüber einer herkömmlichen Achsstabilisierung mit einem Stellmotor sind:
- Bei einem Differenzmoment gleich null von gegengleich rotierenden, hydrodynamischen Drehmomentwandlern existiert keine Haftreibung und kein mögliches Getriebespiel.
- Der Drehmomentverlauf kann stufenlos von null gegen maximal in einer flachen Regelungsgeraden angepasst werden.
- Bei Ausregelung einer größeren Abweichung vom Sollwert muss eine der beiden Motor-/Dämpferachsen die Drehrichtung umkehren. Der dabei auftretende Übergang von Haftreibung auf Gleitreibung sowie die Überwindung des Getriebespiels werden gedämpft durch den bereits in richtiger Drehrichtung laufenden ersten Strang. Die damit verbundene Nichtlinearität im Drehmomentverlauf fällt daher klein aus.

Weitere Merkmale und Vorteile der Erfindung ergeben sich aus der nachfolgenden Beschreibung eines bevorzugten Ausführungsbeispiels der Erfindung unter Bezugnahme auf die angeschlossenen Zeichnungen.

Es zeigt:
- Fig. 1: einen schematischen Aufbau einer bekannten Kamerastabilisierung,
- Fig. 2: eine schematische Darstellung einer Ausführungsform einer erfindungsgemäßen Vorrichtung,
- Fig. 3: eine Abbildung eines Drehmomentverlaufes in Abhängigkeit zur Drehzahl eines Drehmomentwandlers und
- Fig. 4: eine Abbildung eines Drehmomentverlaufes in Abhängigkeit zur Regelabweichung.

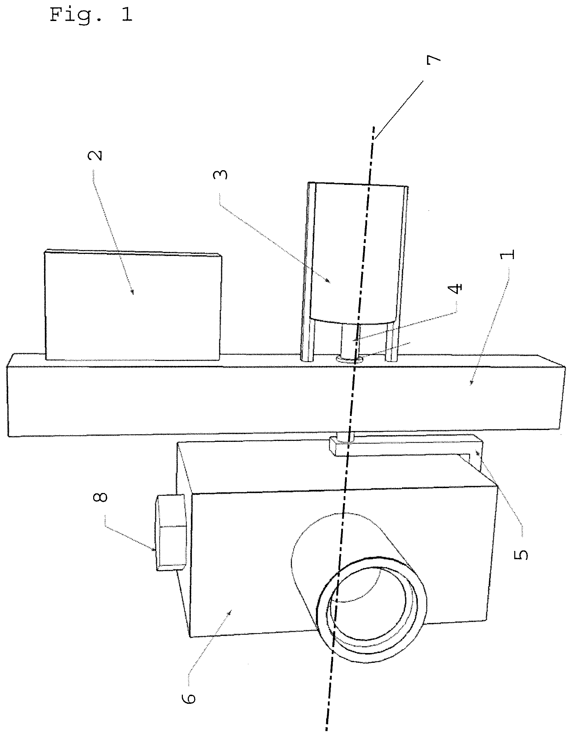

In Fig. 1 ist der schematische Aufbau einer bekannten Kamerastabilisierung dargestellt. An einem Trägerrahmen 1 ist eine Regelelektronik 2 und ein Elektromotor 3 angeordnet. Über einen Rotationsköper 4, der durch den Trägerrahmen 1 verläuft, wird das Drehmoment des Elektromotors 3 auf eine Halterung 5 übertragen. An der Halterung 5 ist eine optische Einrichtung 6 angeordnet, die um eine waagrechte Rotationsachse 7 schwenkbar ist. In Fig. 1 ist die optische Einrichtung 6 eine Kamera. Die Achse des Rotationskörpers 4 läuft mit der Rotationsachse 7 durch den Schwerpunkt der optischen Einrichtung 6. Somit müssen nur mehr die Trägheitsmomente der zu drehenden Elemente überwunden werden. Um den Elektromotor 3 über die Regelelektronik 2 zu regeln, ist ein Gyroskop 8 zur Lagebestimmung der optischen Einrichtung 6 vorgesehen.

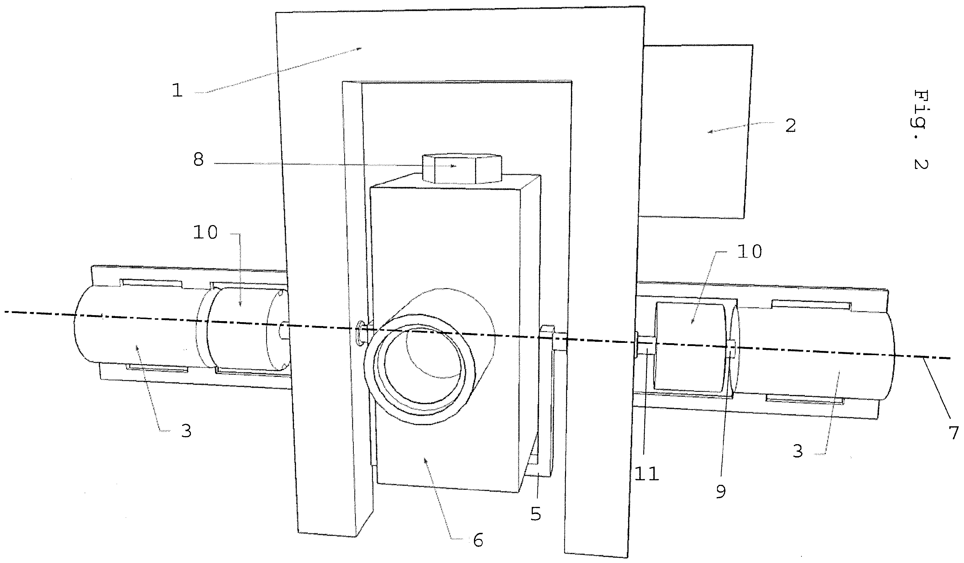

In Fig. 2 ist eine Ausführungsform einer erfindungsgemäßen Vorrichtung schematisch dargestellt, welche grundsätzlich ähnlich wie die zur Fig. 1 beschriebene Vorrichtung aufgebaut ist. Im Unterschied zu der in Fig. 1 gezeigten Vorrichtung weist die gezeigte, erfindungsgemäße Vorrichtung zu beiden Seiten des Trägerrahmens 1 jeweils einen Elektromotor 3 auf, welcher jeweils einen ersten Rotationskörper 9 antreibt. Zwischen den Elektromotoren 3 und der optischen Einrichtung 6 ist jeweils ein hydrodynamischer Drehmomentwandler 10 auf dem vom Elektromotor 3 angetriebenen, ersten Rotationskörper 9 angeordnet. Ausgehend von den hydrodynamischen Drehmomentwandlern 10 ist jeweils ein zweiter Rotationskörper 11 in Richtung zur optischen Einrichtung 6 hin angeordnet, der durch eine Ausnehmung im Trägerrahmen 1 verläuft und mit der Halterung 5 verbunden ist, wodurch die optische Einrichtung 6 um die Rotationsachse 7 verschwenkt werden kann.

Aufgrund besserer Übersicht ist eine nur um eine horizontale Rotationsachse 7 schwenkbare Vorrichtung dargestellt. Die Vorrichtung kann in anderen Ausführungsformen auch über weitere Rotationsachsen verschwenkt werden, beispielsweise über eine lotrechte Rotationsachse oder über eine weitere waagrechte Rotationsachse, die insbesondere senkrecht zur Rotationsachse 7 verläuft. Die Rotationsachse 7 verläuft durch den Schwerpunkt der Rotations-Stabilisierungseinrichtung und ist deckungsgleich mit der Achse des ersten und des zweiten Rotationskörpers 9, 11.

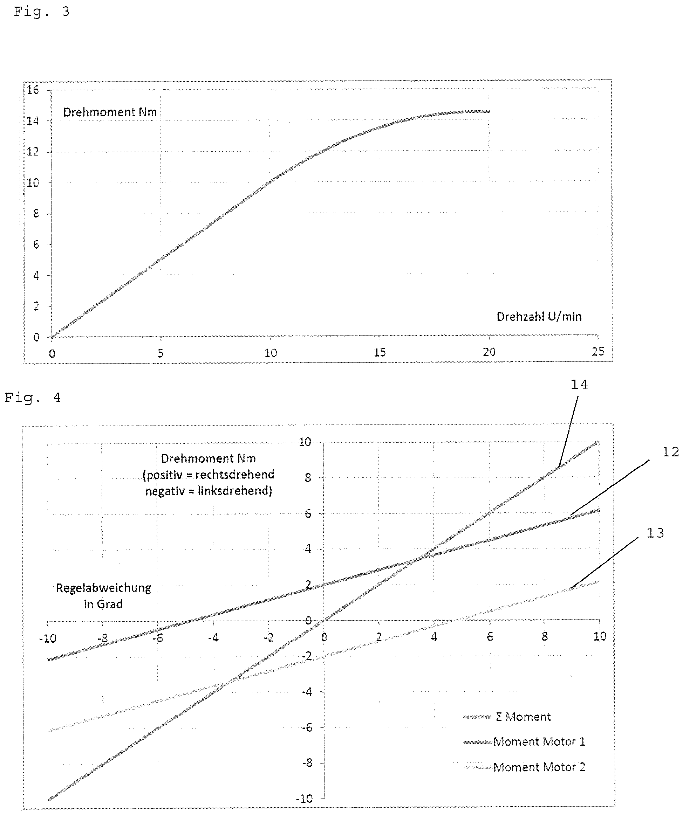

In der Fig. 3 wird der Verlauf des Drehmomentes eines hydrodynamischen Drehmomentwandlers 10 in Abhängigkeit der Drehzahl dargestellt. Dabei ist ersichtlich, dass in einem großen Bereich das Drehmoment linear zur Drehzahl verläuft. Erst im letzten Drittel nähert sich das Moment asymptotisch einem konstanten Maximalwert an. Dieser Maximalwert ist bautypisch unterschiedlich. Zur Regelung bzw. zur Stabilisierung der Lage der optischen Einrichtung 6 wird bevorzugt nur im Bereich der linearen Abhängigkeit zwischen Drehzahl und Drehmoment geregelt.

In der Fig. 4 wird ein linearer Drehmomentverlauf in Abhängigkeit zur Regelabweichung in Grad [°] dargestellt. Die mechanische Anordnung der beiden Einheiten aus Elektromotor 3 und hydrodynamischem Drehmomentwandler 10 erlaubt es, dass entweder beide Elektromotoren 3 in der gleichen Drehrichtung drehen können oder jeweils einer gegensinnig zum anderen drehen kann, und dies für jeden Elektromotor 3 mit jeweils verschiedenen Drehzahlen. Das Diagramm veranschaulicht, mit welchem Drehmoment (=abhängig von der Drehzahl) bei positiven oder negativen Regelabweichungen die Einheiten aus Elektromotor 3 und hydrodynamischem Drehmomentwandler 10 darauf reagieren sollen. Die Steigungen der beiden Motor-/Drehdämpfer-Geraden 12, 13 sowie die Gerade 14 mit dem Summenmoment sind im Diagramm angenommen und stellen nur ein Beispiel einer Regeleinstellung dar. Wesentlich ist, dass die beiden Drehmomente immer bei Regelabweichung null einen gleich großen, aber gegensinnigen Betrag besitzen, d.h. die beiden Drehmomente heben sich in diesem Punkt gegenseitig auf.

Die Besonderheit in der Verwendung einer Kombination aus Elektromotor 3 und hydrodynamischem Drehmomentwandler 10 liegt in der Möglichkeit, die Elektromotoren 3 auch dann zu betreiben, wenn der Ausgang der zugehörigen hydrodynamischen Drehmomentwandler 10 blockiert ist. Diese Blockierung wird dadurch erreicht, dass die zweite Kombination aus Elektromotor 3 und hydrodynamischem Drehmomentwandler 10 mit der gleichen, aber gegensinnigen Drehzahl gegen die erste Kombination arbeitet.

Bei kleinen Regelabweichungswerten (im Diagramm zwischen 0° bis +5° bzw. 0° bis -5°) sind die Drehrichtungen der beiden Einheiten aus Elektromotor 3 und hydrodynamischem Drehmomentwandler 10 gegensinnig und somit wirkt nur das Differenzmoment auf den zweiten Rotationskörper 11 ein. Bei größeren Abweichungen arbeiten die Elektromotoren 3 miteinander (Drehrichtung gleichsinnig) und die Momente der hydrodynamischen Drehmomentwandler 10 addieren sich und sind daher entsprechend groß.

Dies bedeutet aber auch, dass im Nullpunkt (d.h. keine Regelabweichung vorhanden = Halterung 5 steht richtig) beide Stellmotoren 3 gegensinnig mit gleicher (geringer) Drehzahl weiterhin drehen. Das Differenzmoment ist null und daher steht der zweite Rotationskörper 11 bzw. die optische Einrichtung 6 bei laufenden Motoren still. Die zweiten Rotationskörper 11 inklusive der zwei Einheiten sind still zueinander verspannt, ein Getriebespiel damit aufgehoben. Durch die fortlaufende Rotation der Schaufelräder im Inneren der hydrodynamischen Drehmomentwandler 10 ist die Haftreibung bereits überwunden und es herrscht der Zustand der Gleitreibung. Daher ist bei einem neuerlichen Ausregeln einer Abweichung keine Haftreibung und kein Getriebespiel mehr zu überwinden.

## Patentansprüche

1. Rotations-Stabilisierungseinrichtung mit einer optischen Einrichtung (6), insbesondere einer Kamera, und einer Lageregelungsvorrichtung für die optische Einrichtung (6) mit einem Trägerrahmen (1), mit wenigstens einer Rotationsachse (7), welche durch den Schwerpunkt der optischen Einrichtung (6) verläuft, mit wenigstens einem ersten Rotationskörper (9) und wenigstens einem zweiten Rotationskörper (11), die auf der Rotationsachse (7) angeordnet sind, wobei die optische Einrichtung (6) über den zweiten Rotationskörper (11) schwenkbar ist, mit wenigstens einem Elektromotor (3), der den ersten Rotationskörper (9), insbesondere eine Welle, antreibt, mit einer Einrichtung zum Ermitteln der räumlichen Ausrichtung der optischen Einrichtung (6), insbesondere ein Gyroskop (8), und mit einer Regelungselektronik (2), welche den Elektromotor (3) ansteuert, wobei zwischen dem Elektromotor (3) und der optischen Einrichtung (6) ein Drehmomentwandler (10) auf dem vom Elektromotor (3) angetriebenen, ersten Rotationskörper (9) angeordnet ist und wobei an der nicht zum Elektromotor (3) weisenden Seite des Drehmomentwandlers (10), d.h. auf der dem Elektromotor (3) gegenüberliegenden Seite, der zweite Rotationskörper (11), insbesondere eine Welle, am Drehmomentwandler (10) angeordnet ist, **dadurch gekennzeichnet, dass** auf zwei gegenüberliegenden Seiten der optischen Einrichtung (6) jeweils ein Elektromotor (3) und ein hydrodynamischer Drehmomentwandler (10) vorgesehen sind, die sich auf derselben Rotationsachse (7) befinden, und dass die zwei hydrodynamischen Drehmomentwandler (10) in gegengleicher oder in gleicher Richtung und/oder mit gleicher oder unterschiedlicher Drehzahl antreibbar sind.

2. Rotations-Stabilisierungseinrichtung nach Anspruch 1, **dadurch gekennzeichnet, dass** der am hydrodynamischen Drehmomentwandler (10) angeordnete, zweite Rotationskörper (11) ein Verbindungsstück zwischen dem hydrodynamischen Drehmomentwandler (10) und der optischen Einrichtung (6) ist, insbesondere dass der am hydrodynamischen Drehmomentwandler (10) angeordnete, zweite Rotationskörper (11) mit der optischen Einrichtung (6) oder mit einer Halterung (5) der optischen Einrichtung (6) verbunden ist.

3. Rotations-Stabilisierungseinrichtung nach Anspruch 1 oder 2, **dadurch gekennzeichnet, dass** der Trägerrahmen (1) eine Ausnehmung, insbesondere eine Bohrung, aufweist und dass der am hydrodynamischen Drehmomentwandler (10) angeordnete, zweite Rotationskörper (11) durch die Ausnehmung geführt ist.

4. Rotations-Stabilisierungseinrichtung nach einem der Ansprüche 1 bis 3, **dadurch gekennzeichnet, dass** die optische Einrichtung (6) über den am hydrodynamischen Drehmomentwandler (10) angeordneten, zweiten Rotationskörper (11) schwenkbar ist.

5. Rotations-Stabilisierungseinrichtung nach einem der Ansprüche 1 bis 4, **dadurch gekennzeichnet, dass** die Einrichtung zum Ermitteln der räumlichen Ausrichtung der optischen Vorrichtung (6) an der optischen Einrichtung (6) oder an einer Halterung (5) der optischen Einrichtung (6) angeordnet ist und dass die Regelungstechnik (2) den Elektromotor (3) über die Einrichtung zum Ermitteln der räumlichen Ausrichtung der optischen Einrichtung (6) regelt bzw. steuert.

6. Rotations-Stabilisierungseinrichtung nach einem der Ansprüche 1 bis 5, **dadurch gekennzeichnet, dass** der Elektromotor (3) eine Halterung aufweist, und dass die Halterung des Elektromotors (3), und gegebenenfalls die Regelungselektronik (2), mit dem Trägerrahmen (1) verbunden ist.

7. Rotations-Stabilisierungseinrichtung nach einem der Ansprüche 1 bis 6, **dadurch gekennzeichnet, dass** die Rotationsachse (7) bzw. die Rotationsachsen durch den Schwerpunkt der Rotations-Stabilisierungseinrichtung verläuft bzw. verlaufen.

8. Rotations-Stabilisierungseinrichtung nach einem der Ansprüche 1 bis 6, **dadurch gekennzeichnet, dass** der Schwerpunkt der optischen Vorrichtung (6) gleich dem Schwerpunkt der Rotations-Stabilisierungseinrichtung ist.

9. Verfahren zum Betreiben einer Rotations-Stabilisierungseinrichtung mit einer optischen Vorrichtung (6), insbesondere einer Kamera, und einer Lageregelungsvorrichtung für die optische Vorrichtung (6) mit einem Trägerrahmen (1), mit wenigstens einer Rotationsachse (7), welche durch den Schwerpunkt der optischen Einrichtung (6) verläuft, mit wenigstens einem ersten Rotationskörper (9) und wenigstens einem zweiten Rotationskörper (11), die auf der Rotationsachse (7) angeordnet sind, wobei die optische Einrichtung (6) über den zweiten Rotationskörper (11) schwenkbar ist, mit wenigstens einem Elektromotor (3), der den ersten Rotationskörper (9), insbesondere eine Welle, antreibt, mit einer Einrichtung zum Ermitteln der räumlichen Ausrichtung der optischen Einrichtung (6), insbesondere ein Gyroskop (8), und mit einer Regelungselektronik (2), welche den Elektromotor (3) ansteuert, wobei die Lage der optischen Einrichtung (6) durch einen zwischen dem Elektromotor (3) und der optischen Einrichtung (6) auf dem vom Elektromotor (3) angetriebenen ersten Rotationskörper (9) angeordneten Drehmomentwandler (10) geregelt wird und wobei an der nicht zum Elektromotor (3) weisenden Seite des Drehmomentwandlers (10), d.h. auf der dem Elektromotor (3) gegenüberliegenden Seite, der zweite Rotationskörper (11), insbesondere eine Welle, am Drehmomentwandler (10) angeordnet ist, **dadurch gekennzeichnet, dass** die Lage der optischen Einrichtung (6) durch zwei auf gegenüberliegenden Seiten der optischen Einrichtung (6) angeordnete Elektromotoren (3) und hydrodynamische Drehmomentwandler (10), die sich jeweils auf derselben Rotationsachse (7) befinden, geregelt wird, und dass die zwei hydrodynamischen Drehmomentwandler (10) in gegengleicher oder in gleicher Richtung und/oder mit gleicher oder unterschiedlicher Drehzahl angetrieben werden.

10. Verfahren nach Anspruch 9, **dadurch gekennzeichnet, dass** die Lage der optischen Einrichtung (6) derart geregelt wird, dass der Verlauf der von den hydrodynamischen Drehmomentwandlern (10) übertragenen Drehmomente in einem Regelbereich im Wesentlichen linear zu seiner Drehzahl ist und dass in diesem Regelbereich die Rotations-Stabilisierungseinrichtung linear rotatorisch bewegt wird.

11. Verfahren nach Anspruch 9 oder 10, **dadurch gekennzeichnet, dass** die Rotation um die Rotationsachse (7) bei gegengleicher Rotationsbewegung der hydrodynamischen Drehmomentwandler (10) zum Stillstand kommt, wenn die Drehmomente der hydrodynamischen Drehmomentwandler (10) gleich groß sind bzw. die Summe der gegengleichen Drehmomente null ist.

12. Verfahren nach einem der Ansprüche 9 bis 11, **dadurch gekennzeichnet, dass** die Rotation um die Rotationsachse (7) bei gegengleicher Rotationsbewegung der hydrodynamischen Drehmomentwandler (10) erfolgt, wenn die Summe der Drehmomente ungleich null ist.

13. Verfahren nach einem der Ansprüche 9 bis 12, **dadurch gekennzeichnet, dass** die Drehmomentübertragung vom Elektromotor (3) auf den hydrodynamischen Drehmomentwandler (10) im Bereich der Gleitreibung erfolgt, insbesondere dass die Änderungen der vom hydrodynamischen Drehmomentwandler (10) auf die optische Einrichtung (6) übertragenen Drehmomente im Bereich der Gleitreibung linear verlaufen.

## Claims

1. Rotation stabilization device having an optical device (6), in particular a camera, and a position regulation device for the optical device (6) with a carrier frame (1), having at least one axis of rotation (7) which extends through the center of gravity of the optical device (6), having at least one first rotation body (9) and at least one second rotation body (11), which are arranged on the axis of rotation (7), wherein the optical device (6) is pivotable via the second rotation body (11), having at least one electric motor (3) which drives the first rotation body (9), in particular a shaft, having a device for determining the spatial orientation of the optical device (6), in particular a gyroscope (8), and having control electronics (2) which control the electric motor (3), wherein a torque converter (10) is arranged between the electric motor (3) and the optical device (6) on the first rotation body (9) driven by the electric motor (3), and wherein, on the side of the torque converter (10) not facing the electric motor (3), i.e. on the side opposite the electric motor (3), the second rotation body (11), in particular a shaft, is arranged on the torque converter (10), **characterized in that** on two opposite sides of the optical device (6) in each case an electric motor (3) and a hydrodynamic torque converter (10) are provided, which are disposed on the same axis of rotation (7), and **in that** the two hydrodynamic torque converters (10) can be driven in diametrically opposed directions or in the same direction and/or at the same or different rotational speed.

2. Rotation stabilization device according to claim 1, **characterized in that** the second rotation body (11) arranged on the hydrodynamic torque converter (10) is a connecting piece between the hydrodynamic torque converter (10) and the optical device (6), in particular **in that** the second rotation body (11) arranged on the hydrodynamic torque converter (10) is connected to the optical device (6) or to a mount (5) of the optical device (6).

3. Rotation stabilization device according to claim 1 or 2, **characterized in that** the carrier frame (1) has a recess, in particular a bore, and **in that** the second rotation body (11) arranged on the hydrodynamic torque converter (10) is guided through the recess.

4. Rotation stabilization device according to one of claims 1 to 3, **characterized in that** the optical device (6) is pivotable via the second rotation body (11) arranged on the hydrodynamic torque converter (10) .

5. Rotation stabilization device according to one of claims 1 to 4, **characterized in that** the device for determining the spatial orientation of the optical device (6) is arranged on the optical device (6) or on a mount (5) of the optical device (6), and **in that** the control technology (2) regulates or controls the electric motor (3) via the device for determining the spatial orientation of the optical device (6).

6. Rotation stabilization device according to one of claims 1 to 5, **characterized in that** the electric motor (3) has a mount, and **in that** the mount of the electric motor (3), and optionally the control electronics (2), is connected to the carrier frame (1).

7. Rotation stabilization device according to one of claims 1 to 6, **characterized in that** the axis or axes of rotation (7) passes or pass through the center of gravity of the rotation stabilization device.

8. Rotational stabilization device according to one of claims 1 to 6, **characterized in that** the center of gravity of the optical device (6) is equal to the center of gravity of the rotational stabilization device.

9. Method for operating a rotation stabilization device having an optical device (6), in particular a camera, and a position regulation device for the optical device (6) with a carrier frame (1), having at least one axis of rotation (7) which extends through the center of gravity of the optical device (6), having at least one first rotation body (9) and at least one second rotation body (11), which are arranged on the axis of rotation (7), wherein the optical device (6) is pivotable via the second rotation body (11), having at least one electric motor (3) which drives the first rotation body (9), in particular a shaft, having a device for determining the spatial orientation of the optical device (6), in particular a gyroscope (8), and having control electronics (2) which control the electric motor (3), wherein the position of the optical device (6) is regulated by a torque converter (10) arranged between the electric motor (3) and the optical device (6) on the first rotation body (9) driven by the electric motor (3), and wherein, on the side of the torque converter (10) not facing the electric motor (3), i.e. on the side opposite the electric motor (3), the second rotation body (11), in particular a shaft, is arranged on the torque converter (10), **characterized in that** the position of the optical device (6) is regulated by two electric motors (3) and hydrodynamic torque converters (10) arranged on opposite sides of the optical device (6), which are each disposed on the same axis of rotation (7), and **in that** the two hydrodynamic torque converters (10) are driven in diametrically opposed directions or in the same direction and/or at the same or different speeds.

10. Method according to claim 9, **characterized in that** the position of the optical device (6) is regulated in such a way that the course of the torques transmitted by the hydrodynamic torque converters (10) is substantially linear to its rotational speed in a regulation range, and **in that** the rotation stabilization device is moved linearly rotationally in this regulation range.

11. Method according to claim 9 or 10, **characterized in that** the rotation about the axis of rotation (7) comes to a standstill with diametrically opposed rotational movement of the hydrodynamic torque converters (10) when the torques of the hydrodynamic torque converters (10) are equal or the sum of the diametrically opposed torques is zero.

12. Method according to one of claims 9 to 11, **characterized in that** the rotation about the axis of rotation (7) takes place with diametrically opposed rotational movement of the hydrodynamic torque converters (10) when the sum of the torques is not equal to zero.

13. Method according to one of claims 9 to 12, **characterized in that** the torque transmission from the electric motor (3) to the hydrodynamic torque converter (10) takes place in the range of sliding friction, in particular **in that** the changes in the torques transmitted from the hydrodynamic torque converter (10) to the optical device (6) extend linearly in the range of sliding friction.

## Revendications

1. Dispositif de stabilisation de rotation avec un dispositif optique (6), en particulier une caméra, et un mécanisme de contrôle de position pour le dispositif optique (6) avec un cadre-support (1), avec au moins un axe de rotation (7) qui passe par le centre de gravité du dispositif optique (6), avec au moins un premier corps de rotation (9) et au moins un deuxième corps de rotation (11) qui sont disposés sur l'axe de rotation (7), le dispositif optique (6) pouvant pivoter sur le deuxième corps de rotation (11), avec au moins un moteur électrique (3), qui entraîne le premier corps de rotation (9), en particulier un arbre, avec un dispositif pour déterminer l'orientation spatiale du dispositif optique (6), en particulier un gyroscope (8), et avec un équipement électronique de régulation (2), qui commande le moteur électrique (3), un convertisseur de couple (10) étant disposé entre le moteur électrique (3) et le dispositif optique (6) sur le premier corps de rotation (9) entraîné par le moteur électrique (3), et, sur le côté du convertisseur de couple (10) qui n'est pas orienté vers le moteur électrique (3), c'est-à-dire sur le côté opposé au moteur électrique (3), le deuxième corps de rotation (11), en particulier un arbre, est disposé sur le convertisseur de couple (10), **caractérisé en ce que** sur deux côtés opposés du dispositif optique (6) sont prévus respectivement un moteur électrique (3) et un convertisseur de couple hydrodynamique (10), qui se trouvent sur le même axe de rotation (7), et **en ce que** les deux convertisseurs de couple hydrodynamiques (10) peuvent être entraînés dans des sens opposés ou dans le même sens et/ou avec une vitesse de rotation identique ou différente.

2. Dispositif de stabilisation de rotation selon la revendication 1, **caractérisé en ce que** le deuxième corps de rotation disposé sur le convertisseur de couple hydrodynamique (10) est un raccord entre le convertisseur de couple hydrodynamique (10) et le dispositif optique (6), en particulier **en ce que** le deuxième corps de rotation (11) disposé sur le convertisseur de couple hydrodynamique (10) est relié au dispositif optique (6) ou à un support (5) du dispositif optique (6).

3. Dispositif de stabilisation de rotation selon la revendication 1 ou 2, **caractérisé en ce que** le cadre-support (1) présente un évidement, en particulier un alésage, et **en ce que** le deuxième corps de rotation (11) disposé sur le convertisseur de couple hydrodynamique (10) est guidé à travers l'évidement.

4. Dispositif de stabilisation de rotation selon l'une des revendications 1 à 3, **caractérisé en ce que** le dispositif optique (6) peut pivoter via le deuxième corps de rotation (11) disposé sur le convertisseur de couple hydrodynamique (10) .

5. Dispositif de stabilisation de rotation selon l'une des revendications 1 à 4, **caractérisé en ce que** le dispositif pour déterminer l'orientation spatiale du mécanisme optique (6) est disposé sur le dispositif optique (6) ou sur un support (5) du dispositif optique (6) et **en ce que** la technique de régulation (2) régule resp. commande le moteur électrique (3) via le dispositif afin de déterminer l'orientation spatiale du dispositif optique (6).

6. Dispositif de stabilisation de rotation selon l'une des revendications 1 à 5, **caractérisé en ce que** le moteur électrique (3) comporte un support, et **en ce que** le support du moteur électrique (3), et le cas échéant, l'équipement électronique de régulation (2), sont reliés au cadre-support (1) .

7. Dispositif de stabilisation de rotation selon l'une des revendications 1 à 6, **caractérisé en ce que** l'axe de rotation passe (7) resp. les axes de rotation passent par le centre de gravité du dispositif de stabilisation de rotation.

8. Dispositif de stabilisation de rotation selon l'une des revendications 1 à 6, **caractérisé en ce que** le centre de gravité du mécanisme optique (6) est identique au centre de gravité du dispositif de stabilisation de rotation.

9. Procédé pour l'exploitation d'un dispositif de stabilisation de rotation avec un mécanisme optique (6), en particulier une caméra, et un mécanisme de contrôle de position pour le mécanisme optique (6) avec un cadre-support (1), avec au moins un axe de rotation (7) qui passe par le centre de gravité du dispositif optique (6), avec au moins un premier corps de rotation (9) et au moins un deuxième corps de rotation (11) qui sont disposés sur l'axe de rotation (7), le dispositif optique (6) pouvant pivoter sur le deuxième corps de rotation (11), avec au moins un moteur électrique (3), qui entraîne le premier corps de rotation (9), en particulier un arbre, avec un dispositif pour déterminer l'orientation spatiale du dispositif optique (6), en particulier un gyroscope (8), et avec un équipement électronique de régulation (2), qui commande le moteur électrique (3), la position du dispositif optique (6) étant régulée par un convertisseur de couple (10) disposé entre le moteur électrique (3) et le dispositif optique (6) sur le premier corps de rotation (9) entraîné par le moteur électrique (3), et, sur le côté du convertisseur de couple (10) qui n'est pas orienté vers le moteur électrique (3), c'est-à-dire sur le côté opposé au moteur électrique (3), le deuxième corps de rotation (11), en particulier un arbre, est disposé sur le convertisseur de couple (10), **caractérisé en ce que** la position du dispositif optique (6) est régulé par sur deux moteurs électriques (3) disposés sur les côtés opposés du dispositif optique (6) et des convertisseurs de couple hydrodynamiques (10), qui se trouvent sur le même axe de rotation (7), et **en ce que** les deux convertisseurs de couple hydrodynamiques (10) sont entraînés dans des sens opposés ou dans le même sens et/ou avec une vitesse de rotation identique ou différente.

10. Procédé selon la revendication 9, **caractérisé en ce que** la position du dispositif optique (6) est régulée de telle manière que l'évolution des couples transmis par les convertisseurs de couple hydrodynamiques (10) est sensiblement linéaire par rapport à sa vitesse de rotation dans une zone de régulation et **en ce que** dans cette zone de régulation, le dispositif de stabilisation de rotation est déplacé en rotation de manière linéaire.

11. Procédé selon la revendication 9 ou 10, **caractérisé en ce que** la rotation autour de l'axe de rotation (7) s'arrête avec un mouvement de rotation opposé des convertisseurs de couple hydrodynamiques (10) lorsque les couples des convertisseurs de couple hydrodynamiques (10) sont égaux resp. lorsque la somme des couples opposés est nulle.

12. Procédé selon l'une des revendications 9 à 11, **caractérisé en ce que** la rotation autour de l'axe de rotation (7) s'effectue avec un mouvement de rotation opposé des convertisseurs de couple hydrodynamiques (10) lorsque la somme des couples n'est pas nulle.

13. Procédé selon l'une des revendications 9 à 12, **caractérisé en ce que** la transmission du couple du moteur électrique (3) au convertisseur de couple hydrodynamique (10) s'effectue dans la zone de frottement de glissement, en particulier **en ce que** les modifications des couples transmis par le convertisseur de couple hydrodynamique (10) au dispositif optique (6) évoluent de façon linéaire dans la zone de frottement de glissement.
